(19) Europäisches Patentamt / European Patent Office / Office européen des brevets

(11) **EP 2 034 130 A2**

(12) **DEMANDE DE BREVET EUROPEEN**

(43) Date de publication:
**11.03.2009 Bulletin 2009/11**

(51) Int Cl.:
***E21B 41/00*** *(2006.01)*

(21) Numéro de dépôt: **08290635.5**

(22) Date de dépôt: **27.06.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **06.09.2007 FR 0706256**

(71) Demandeur: **IFP**
**92852 Rueil-Malmaison Cédex (FR)**

(72) Inventeurs:
• **Le Ravalec, Mickaële**
**92500 Rueil-Malmaison (FR)**
• **Roggero, Frédéric**
**92500 Rueil-Malmaison (FR)**
• **Gervais, Véronique**
**92500 Rueil-Malmaison (FR)**

(54) **Méthode pour mettre à jour un modèle géologique à l'aide de données dynamiques et d'essais de puits**

(57) - Méthode pour optimiser l'exploitation d'un gisement souterrain, dans laquelle on met à jour un modèle géologique à l'aide de données dynamiques et d'essais de puits.

- On construit un modèle de réservoir en réalisant un changement d'échelle du modèle géologique. On simule des données dynamiques à partir de ce modèle de réservoir. On identifie des zones d'influence au sein du modèle géologique où les essais de puits induisent une variation de pression lors des essais de puits. Puis, on simule des essais de puits pour chaque zone d'influence. On calcule une fonction objectif mesurant l'écart entre les données simulées et les données mesurées. Puis, on modifie le modèle géologique de façon à réduire au maximum la fonction objectif, en utilisant une technique de paramétrage géostatistique. Enfin, on optimise l'exploitation du gisement souterrain en évaluant, à l'aide d'un simulateur d'écoulement, la production du gisement pour différents schémas de production.

- Application notamment à l'exploitation de gisements pétroliers.

**FIG. 1**

EP 2 034 130 A2

**Description**

La présente invention concerne le domaine de l'exploration et la production pétrolière. Plus particulièrement, l'invention concerne une méthode pour optimiser l'exploitation de gisement souterrain, par construction d'un modèle géologique représentatif du gisement, de façon à respecter des données dynamiques et des essais de puits.

L'optimisation et l'exploitation des gisements pétroliers reposent sur une description aussi précise que possible de la structure et des propriétés pétrophysiques du gisement étudié. Pour ce faire, les spécialistes utilisent un outil qui permet de rendre compte de ces deux aspects de façon approchée : le modèle géologique. Un modèle géologique a donc pour vocation de rendre compte, au mieux, de la structure et des propriétés pétrophysiques d'un gisement. Le modèle géologique est constitué de différents éléments : un maillage qui constitue l'ossature du gisement et qui doit être représentatif de la structure, et des cartes tri ou bidimensionnelles de propriétés pétrophysiques associées à ce maillage et qui doivent être représentatives du comportement statique ou dynamique du gisement. Ainsi, on entend par modèle géologique d'un gisement, un objet représentant une discrétisation du gisement.

Afin de prédire le comportement dynamique d'un gisement en production, des simulations numériques d'écoulement sont réalisées à partir du modèle géologique. Pour réduire les incertitudes et obtenir un modèle représentatif de la réalité, le modèle géologique doit être conditionné par l'ensemble des données disponibles. Pour appliquer ce type de modélisation en intégrant différentes sources de données, on paramètre le modèle, c'est-à-dire que l'on définit des paramètres, que l'on appelle « paramètres de calage du modèle ». A titre d'exemple, les paramètres de calage peuvent être les propriétés pétrophysiques moyennes des faciès (perméabilité, porosité, etc.), des propriétés géostatistiques telles que certains paramètres du variogramme (portée, direction d'anisotropie, etc.) ou les coefficients des lois liant certaines propriétés (rapport d'anisotropie verticale, loi porosité/perméabilité, etc.).

La prise en compte des données dynamiques requiert une méthodologie adaptée pour modifier les modèles issus de modélisations géostatistiques appliquées aux données statiques. Cette étape consistant à ajuster un modèle existant pour qu'il soit cohérent avec des données dynamiques, est appelée « calage d'historique » (« history matching »). Ce processus de calage doit permettre d'ajuster certains paramètres du modèle géologique, de façon à reproduire des données dynamiques mesurées sur le terrain, tout en conservant la cohérence avec les données statiques et les propriétés géostatistiques.

On entend par données dynamiques des données qui évoluent en fonction de la production du réservoir. Il peut s'agir de données de production ou de données issues de sismiques répétées (4D). Les données de production sont collectées dans les puits tout au long du processus d'exploitation du réservoir.

Les essais de puits correspondent à des actions plus concentrées dans le temps. A des temps donnés, les ingénieurs réalisent des essais de puits, c'est-à-dire qu'ils produisent pendant quelques heures ou quelques jours en respectant certaines conditions de débit ou de pression, et ils suivent l'évolution des pressions dans les puits. Ces pressions renseignent sur les zones autour des puits. Le principe des essais de puits consiste à mesurer la pression dans un puits soumis à des variations de débits. Les mesures peuvent être effectuées pendant la production ou pendant une période d'arrêt du puits. L'information déduite des essais de puits, c'est-à-dire des pressions et des dérivées des pressions par rapport au temps, est utilisée au quotidien en forage, en complétion, en production...

Il apparaît donc indispensable de contraindre les modèles géologiques par ce type d'information.

**État de la technique**

Pendant plusieurs décennies, les essais de puits ont permis de déterminer certaines caractéristiques du réservoir comme la perméabilité de la formation (supposée constante), le skin, la pression du réservoir. Cependant, on connaît peu de méthodes pour affiner les modèles de réservoir en y intégrant à la fois les données de production et les essais de puits. Une des raisons à ce phénomène est que la technologie des essais de puits repose surtout sur des solutions analytiques qui ne sont pas directement compatibles avec les représentations discrètes utilisées pour les modèles en simulation de réservoir.

Avec l'avènement des simulateurs d'écoulement numériques, il est apparu que les essais de puits pouvaient contribuer à affiner la description du modèle géologique : distribution spatiale des valeurs de perméabilité, estimation de distance aux frontières, ... Un simulateur d'écoulement est un logiciel permettant, entre autre, de modéliser la production d'un gisement en fonction du temps, à partir de mesures décrivant le gisement, c'est-à-dire, à partir d'un modèle de réservoir.

Compte tenu du fait qu'il n'existe pas de méthode adaptée à l'intégration simultanée des essais de puits et des données de production dans les modèles numériques de réservoir, une technique classique est de caler les données des essais de puits, en utilisant la même approche utilisée pour caler les données de production, mais de façon séparée. Une telle technique est décrite par exemple dans le document suivant :

Mezghani, M., 1999, « Caractérisation des réservoirs hétérogènes : méthode des sentinelles et quantification des incertitudes », Thèse de Doctorat, Univ. Paul Sabatier, Toulouse, France.

Il s'agit de donner en entrée d'un logiciel, appelé simulateur d'écoulement, l'historique des débits, de simuler les pressions et de les comparer aux pressions mesurées pendant l'essai de puits. Puis, on modifie les paramètres du modèle tant que le calage des pressions n'est pas satisfaisant.

On connaît également une méthode permettant de caler simultanément les pressions, les dérivées des pressions ainsi que les données de production :

Landa, J.L., 1997, Reservoir parameter estimation constrained to pressure transients, performance history and distributed saturation data, Ph.D., Stanford Univ., Stanford, CA.

Selon cette approche, les données de production et les essais de puits sont simulés à la même échelle, à savoir à l'échelle réservoir. Or, les essais de puits correspondent à une échelle plus fine que l'échelle réservoir.

Enfin, on connaît une autre méthode, appelée NWT (Numerical Well Testing). Cette méthode est décrite dans :

Kamal, M.M., Pan, Y., Landa, J.L., et Thomas, O.O., 2005, « Numerical well testing - A method to use transient testing results in reservoir simulation", SPE 95905, Dallas, TX.

L'inconvénient de la méthode NWT est que les calages des essais de puits et des données de production sont dissociés.

Ainsi, l'objet de l'invention est une méthode alternative d'optimisation d'exploitation de gisement souterrain, par construction de modèle géologique représentatif du gisement, respectant des données dynamiques et des essais de puits.

**La méthode selon l'invention**

L'invention est donc une méthode pour optimiser l'exploitation d'un gisement souterrain, à partir d'un modèle géologique représentatif du gisement, de données dynamiques issues de mesures au sein dudit gisement, et à partir de données issues d'essais de puits réalisés sur des puits traversant ledit gisement. La méthode comporte les étapes suivantes :

A) on modifie ledit modèle géologique de façon à respecter les données dynamiques mesurées et les données issues des essais de puits, en réalisant les étapes suivantes :

- on construit un modèle de réservoir en réalisant un changement d'échelle dudit modèle géologique ;

- on simule des données dynamiques à partir dudit modèle de réservoir, à l'aide d'un simulateur d'écoulement ;

- on identifie des zones d'influence dudit modèle géologique où les essais de puits induisent une variation de pression lors des essais de puits ;

- on simule des essais de puits pour chaque zone d'influence à l'aide d'un simulateur d'écoulement ;

- on calcule une fonction objectif comprenant un terme mesurant un écart entre les données dynamiques mesurées et les données dynamiques simulées, un terme mesurant un écart entre les données issues desdits essais de puits et des données issues des simulations des essais de puits ;

- on modifie ledit modèle géologique de façon à réduire la fonction objectif, en utilisant une technique de paramétrage géostatistique, puis l'on réitère les étapes précédentes jusqu'à obtenir une valeur minimale pour la fonction objectif ; et

B) on optimise l'exploitation du gisement souterrain en évaluant, à l'aide d'un simulateur d'écoulement, la production dudit gisement pour différents schémas de production appliqués audit modèle géologique.

Pour simuler les essais de puits pour chaque zone d'influence, on peut appliquer des conditions limites aux zones définies en fonction du modèle réservoir. Ces conditions limites peuvent être calculées lors de la simulation des données dynamiques, ou modélisées à partir de la méthode des sentinelles.

Concernant les données issues des essais de puits, il peut s'agir des pressions et des dérivées des pressions.

De plus, la fonction objectif peut comporter un terme relatif à des données issues d'une sismique 4D.

Selon la méthode, la technique de paramétrage géostatistique peut être la méthode des points pilotes, ou la méthode de perturbation de probabilité, ou encore, la méthode des déformations graduelles.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 est un schéma des différentes étapes de la méthode de calage des données de production et des essais de puits.

- La figure 2 illustre l'évolution de la porosité de modèle fin (colonne 1), du modèle grossier (colonne 2) déduit du modèle fin et de la zone extraite (colonne 3) en fonction des valeurs des paramètres de déformation $t_1$ et $t_2$.

**Description détaillée de la méthode**

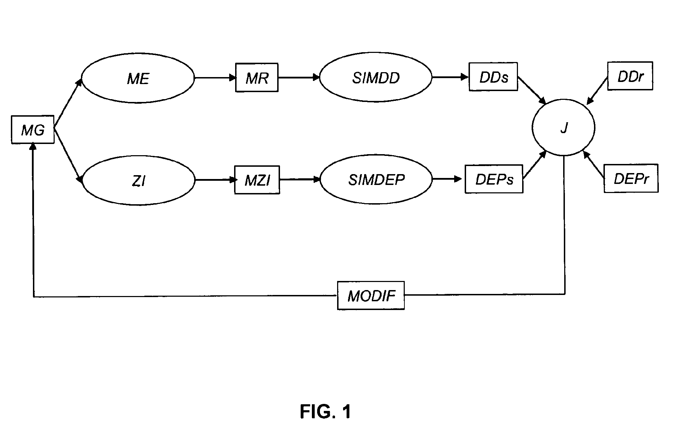

La méthode alternative d'optimisation d'exploitation de gisement souterrain, comporte la construction d'un modèle géologique représentatif du gisement, respectant à la fois des données dynamiques et des essais de puits. La méthode prend en compte les différences d'échelle entre les essais de puits et les données dynamiques. Elle permet de traiter le calage de ces deux types de données de façon simultanée. La méthodologie proposée est schématisée sur la figure 1. Les principales étapes du processus sont les suivantes :

1) On génère un modèle géologique (*MG*) à une échelle fine, c'est-à-dire sur un maillage fin. Ce modèle respecte les données statiques, c'est-à-dire les données qui ne dépendent pas des mouvements de fluide au sein du gisement (données de diagraphies, données mesurées sur des carottes prélevées dans des puits, sismique...). Ce modèle est construit à partir de techniques stochastiques bien connues des spécialistes.

2) Le modèle géologique est transféré vers une échelle grossière, par application d'une procédure de mise à l'échelle (*ME*) du modèle géologique, de façon à construire un modèle de réservoir (*MR*). Le modèle de réservoir est donc associé à un maillage grossier. On utilise un tel modèle de réservoir, car celui-ci contient beaucoup moins de mailles que le modèle géologique fin (*MG*). De fait, le temps CPU requis pour une simulation d'écoulement devient acceptable en pratique

3) On réalise une simulation d'écoulement pour le modèle de réservoir (*SIMDD*), à l'aide d'un simulateur d'écoulement, afin de calculer les réponses correspondant aux données de production, ou tout autre données dynamiques (*DDs*).

4) On analyse des essais de puits pour identifier des zones d'influence (*ZI*), c'est-à-dire des zones où l'essai de puits induit une variation de pression. Cette phase, consiste donc à évaluer le rayon d'investigation pour chaque puits soumis à un essai de puits. Un grand nombre de définitions sont disponibles dans la littérature pour caractériser le rayon d'investigation :

Van Poolen H.K., "Radius of drainage and stabilization time equations", Oil and Gas Journal, September 14, 1964, pp. 138-146.

A titre d'exemple, Jones définit le rayon d'investigation par l'endroit du réservoir où l'évolution de la pression représente 1% de l'évolution observée au puits. En se basant sur la solution analytique de l'évolution de la pression en fonction du temps dans un milieu homogène, le rayon d'investigation s'exprime alors sous la forme:

$$r_i = 4\sqrt{\frac{kt}{\phi \mu c_t}},$$

en fonction de la perméabilité $k$, du temps $t$, de la porosité $\phi$, de la viscosité $\mu$ et de la compressibilité totale $c_t$.

On peut également utiliser la méthode décrite dans Thompson, L.G., et Reynolds, A.C., 1997, Well testing for radially heterogeneous reservoirs under single and pultiphase flow conditions, SPEFE, March, 57-64.

Ces zones d'influence sont associées à des maillages fins (*MZI*).

5) On simule les essais de puits pour chaque zone d'influence (*SIMDEP*). Le simulateur peut être ici le même que celui utilisé à l'étape 3. On obtient alors les réponses en pression. On en déduit les dérivées des pressions par rapport au temps. L'ensemble de ces données est noté *DEPs.* Pour cette étape, il faut préciser les conditions aux limites appliquées aux zones extraites (*ZI*) du modèle fin (*MG*) pour simuler les essais de puits. Trois modes de réalisations sont décrits :

a. Les conditions aux limites sont inconnues et fixées arbitrairement par l'utilisateur. Par exemple, on peut considérer des frontières imperméables ou à pression constante.

b. Les conditions aux limites sont calculées lorsque l'on fait la simulation d'écoulement sur le modèle de réservoir (*MR*). On utilise alors cette information pour contraindre les simulations d'écoulement sur les zones extraites fines. Par exemple, la simulation grossière permet de connaître les flux sur les interfaces des mailles grossières. Ces flux pourront être redistribués sur les interfaces des mailles fines proportionnellement aux transmissivités. Une telle technique est décrite par exemple dans Gautier, Y., Blunt, M., et Christie, M., 1999, « Nested gridding and streamline- based simulation for fast reservoir performance prediction », Computational Geosciences, 295-320.

c. Les conditions aux limites sont mal connues. L'utilisation de la méthode des sentinelles (Lions, 1988) pour identifier les paramètres du modèle permet de considérer cette condition. Cette méthode permet de modéliser un bruit sur les conditions aux limites. Elle est décrite dans :

Lions, J.-L., 1988, « Sur les sentinelles des systèmes distribués. Conditions frontières, termes sources, coefficients incomplètement connus », C. R. Acad. Sci., Paris, 307, 865-870.

6) On construit une fonction objectif (*J*) qui mesure l'écart entre les données réelles (*DDr* et *DEPr*) et les réponses simulées correspondantes (*DDs* et *DEPs*). Typiquement, cette fonction comprend :

a. un terme pour mesurer l'écart entre les données dynamiques réelles *DDr* et les données dynamiques simulées *DDs* sur le maillage grossier ;

b. un terme pour mesurer l'écart entre les données de pressions relevées ($p_i$) pendant les essais de puits et les pressions simulées ($g(t_f)_i$) sur les maillages extraits fins;

c. un terme pour mesurer l'écart entre les dérivées déduites des données de pressions relevées ($dp_i$) pendant les essais de puits et des dérivées estimées ($dg(t_f)_i$) à partir des pressions simulées sur les maillages extraits fins.

$$J(\mathbf{t}_f, \mathbf{t}_g) = \frac{1}{2}\sum_i w_i \left[ g(\mathbf{t}_f, \mathbf{t}_g)_i - DDr_i \right]^2 + \frac{1}{2}\sum_i v_i \left[ g(\mathbf{t}_f)_i - p_i \right]^2 + \frac{1}{2}\sum_i q_i \left[ dg(\mathbf{t}_f)_i - dp_i \right]^2$$

Les coefficients *w,v* et q sont des poids qui traduisent la confiance dans les différents types de données. L'opérateur *g* est le simulateur d'écoulement. Le vecteur t représente l'ensemble des paramètres du problème : il comprend des paramètres grossiers tg et des paramètres fins $\mathbf{t}_f$. Les paramètres du problème sont par exemple les paramètres de production (positions des failles, transmissivités des failles, coefficients d'activité des aquifères, skins des puits...) ou encore les paramètres pétrophysiques (porosité, perméabilité....)
La fonction objectif pourrait aussi être enrichie par les données issues de la sismique 4D.

7) On réduit la fonction objectif en modifiant (*MODIF*) les paramètres du modèle. Les paramètres les plus délicats à traiter sont les paramètres pétrophysiques : il s'agit de modifier les distributions spatiales des valeurs de porosité et perméabilité tout en préservant la structure spatiale globale, caractérisée par des propriétés statistiques estimées à partir des données statiques (mesures sur carottes, diagraphies, interprétation sismique...). Selon un mode de réalisation, on peut utiliser une technique de paramétrage géostatistique comme la méthode des points pilotes. La méthode des points pilotes est présentée dans Marsily, G. de, 1978, «De l'identification des systèmes hydrogéologiques », Thèse de Doctorat d'État, Université Paris VI. Elle permet de modifier le modèle de réservoir localement autour des points pilotes.
Selon un mode de réalisation, on peut aussi utiliser comme technique de paramétrage géostatistique la méthode de perturbation de la probabilité. Cette méthode est présentée dans Hoffman B. T., Caers J., 2005, « Regional probability perturbations for history matching », Journal of Petroleum Science and Engineering, 46, 53-71.. Elle permet de modifier un modèle numérique de réservoir de façon globale ou locale. Cette méthode s'apparente beaucoup à la méthode de déformation graduelle utilisée suivant le mode de réalisation préféré décrit ci-après. Selon un mode de réalisation préféré, on utilise la méthode de déformation graduelle. Cette méthode a été proposée par Hu, L.-Y., 2000, « Gradual deformation and iterative calibration of Gaussian-related stochastic models », Math. Geol., 32(1), 87-108. Elle permet de perturber une réalisation d'une fonction aléatoire (c'est-à-dire une image possible du modèle géologique) à partir d'un nombre réduit de paramètres tout en préservant la structure spatiale de cette même réalisation. L'avantage de cette méthode est qu'elle permet de modifier la réalisation globalement ou localement. Lorsque la déformation graduelle est globale, on considère un jeu de coefficients de déformation qui tous s'appliquent de la même manière à l'ensemble des mailles du modèle. Lorsque la déformation graduelle est locale, des jeux de coefficients de déformation sont affectés à des zones du modèle et toutes les mailles d'une même zone sont identiquement affectées par le jeu de coefficients correspondant. Selon l'invention, on affecte des paramètres de déformation graduelle à chacune des zones extraites (*ZI*) du modèle fin, ainsi qu'au complémentaire du modèle fin. Pour pouvoir faire une déformation graduelle locale, c'est-à-dire une déformation graduelle par zone, on applique le processus de déformation graduelle au bruit blanc Gaussien utilisé pour générer la réalisation de porosité ou perméabilité.

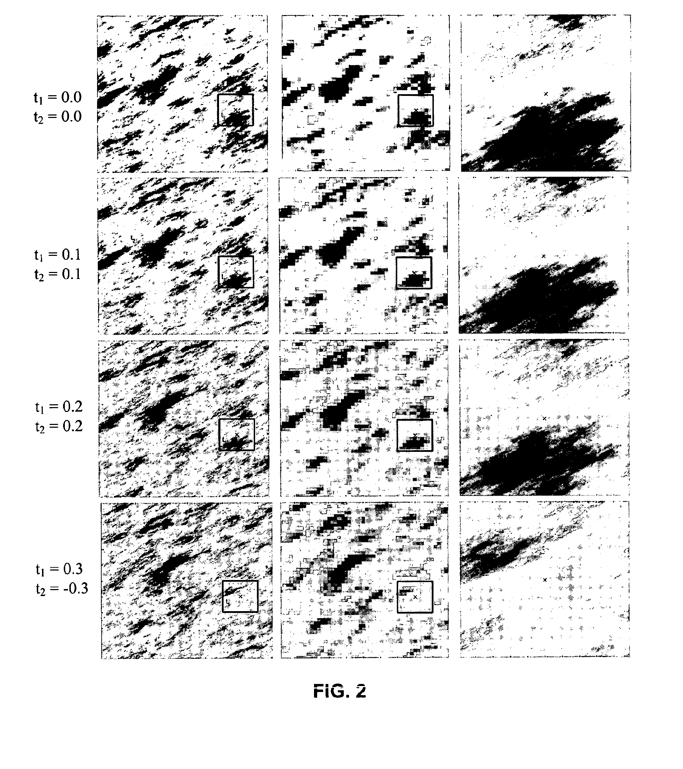

Un exemple est présenté sur la figure 2. Un essai de puits est réalisé au niveau du puits représenté par une croix. La zone affectée par cet essai est inclue dans le carré entourant la croix. On alloue alors un paramètre de déformation graduelle $t_1$ à cette zone et un autre paramètre de déformation graduelle $t_2$ au restant du domaine. La figure 2 montre l'évolution du modèle de porosité fin (colonne de gauche), celle du modèle de porosité grossier déduit du modèle fin à partir d'une moyenne arithmétique (colonne centrale), et l'évolution de la porosité dans la zone extraite autour du puits (colonne de droite).

Au début, $t_1$ et $t_2$ suivent la même évolution. Puis, leurs valeurs évoluent indépendamment l'une de l'autre. On vérifie que pour toute valeur des paramètres, la continuité spatiale est préservée. Suivant ce paramétrage, on minimise la fonction objectif en modifiant les paramètres de production ainsi que les paramètres de déformation graduelle. Pour ce faire, on peut utiliser des techniques bien connues des spécialistes telles que les techniques de minimisation avec gradients ou non (méthode de la plus grande descente, méthode de Gauss-Newton, méthode de Levenberg-Marquardt, méthode de Powell, méthode du simplex, algorithmes génétiques...). Plusieurs paramètres de déformation peuvent être associés à une unique zone. Dans ce cas, le nombre de degré de liberté pour réduire la fonction objectif est plus important. Il faut néanmoins veiller à ce que deux zones ne dépendent pas du même paramètre. Lorsque les paramètres sont modifiés, on revient à l'étape 1 et on itère. Le processus de minimisation s'arrête lorsque la fonction objectif est suffisamment petite, ou en d'autres termes, lorsque le calage des données est raisonnablement bon.

A partir de ce modèle géologique construit sur un maillage fin, représentatif du gisement étudié, on peut évaluer ce gisement par l'étude et l'optimisation de schémas de production.

Un schéma de production constitue une option de développement d'un gisement. Il regroupe tous les paramètres nécessaires à la mise en production d'un gisement. Ces paramètres peuvent être la position d'un puits, le niveau de complétion, la technique de forage...

L'étude d'un gisement comporte deux phases principales : une phase de caractérisation du réservoir et une phase de prévision de production. La méthode de calage selon l'invention permet de réaliser une caractérisation précise et conforme à la fois aux données de production et aux essais de puits.

Pour la phase de prévision de production à un instant donné, pour améliorer cette production, ou, en général, pour augmenter le rendement économique du champ, le spécialiste possède un outil, appelé « simulateur d'écoulement ». Un simulateur d'écoulement fonctionne en acceptant des paramètres en entrée, et en résolvant des équations physiques de mécanique des fluides en milieu poreux, pour délivrer des informations appelées réponses. L'ensemble des paramètres d'entrées est contenu dans le modèle de réservoir. Les propriétés associées aux mailles de ce modèle sont alors appelées paramètres. Ces paramètres sont notamment associés à la géologie du gisement, aux propriétés pétro-physiques, au développement du gisement et aux options numériques du simulateur. Les réponses (sorties) fournies par le simulateur sont, par exemple, la production d'huile, d'eau ou de gaz du réservoir et de chaque puit pour différents temps.

Ainsi, à l'aide de la méthode de calage selon l'invention, et d'un simulateur d'écoulement, on peut évaluer un gisement souterrain et optimiser son schéma de production.

**Revendications**

1.   Méthode pour optimiser l'exploitation d'un gisement souterrain, à partir d'un modèle géologique représentatif du gisement, de données dynamiques issues de mesures au sein dudit gisement, et à partir de données issues d'essais de puits réalisés sur des puits traversant ledit gisement, **caractérisée en ce que** l'on réalise les étapes suivantes :

A) on modifie ledit modèle géologique de façon à respecter les données dynamiques mesurées et les données issues des essais de puits, en réalisant les étapes suivantes :

- on construit un modèle de réservoir en réalisant un changement d'échelle dudit modèle géologique ;
- on simule des données dynamiques à partir dudit modèle de réservoir, à l'aide d'un simulateur d'écoulement ;
- on identifie des zones d'influence au sein dudit modèle géologique où les essais de puits induisent une variation de pression ;
- on simule des essais de puits pour chaque zone d'influence à l'aide d'un simulateur d'écoulement ;
- on calcule une fonction objectif comprenant un terme mesurant un écart entre les données dynamiques mesurées et les données dynamiques simulées, un terme mesurant un écart entre les données issues desdits essais de puits et des données issues des simulations des essais de puits ;
- on modifie ledit modèle géologique de façon à réduire la fonction objectif, en utilisant une technique de paramétrage géostatistique, puis l'on réitère les étapes précédentes jusqu'à obtenir une valeur minimale pour la fonction objectif ; et

B) on optimise l'exploitation du gisement souterrain en évaluant, à l'aide d'un simulateur d'écoulement, la production dudit gisement pour différents schémas de production appliqués audit modèle géologique.

2.  Méthode selon la revendication 1, dans laquelle on simule des essais de puits pour chaque zone d'influence en appliquant des conditions limites auxdites zones définies en fonction dudit modèle de réservoir.

3.  Méthode selon la revendication 2, dans laquelle les conditions limites sont calculées lors de la simulation des données dynamiques.

4.  Méthode selon la revendication 2, dans laquelle les conditions limites sont modélisée à partir de la méthode des sentinelles.

5.  Méthode selon l'une des revendications précédentes, dans laquelle les données issues des essais de puits sont des pressions et des dérivées des pressions.

6.  Méthode selon l'une des revendications précédentes, dans laquelle la fonction objectif comporte un terme relatif à des données issues d'une sismique 4D.

7.  Méthode selon l'une des revendications précédentes, dans laquelle la technique de paramétrage géostatistique est la méthode des points pilotes.

8.  Méthode selon l'une des revendications précédentes, dans laquelle la technique de paramétrage géostatistique est la méthode de perturbation de probabilité.

9.  Méthode selon l'une des revendications précédentes, dans laquelle la technique de paramétrage géostatistique est la méthode des déformations graduelles.

**FIG. 1**

$t_1 = 0.0$
$t_2 = 0.0$

$t_1 = 0.1$
$t_2 = 0.1$

$t_1 = 0.2$
$t_2 = 0.2$

$t_1 = 0.3$
$t_2 = -0.3$

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MEZGHANI, M.** *Caractérisation des réservoirs hétérogènes : méthode des sentinelles et quantification des incertitudes,* 1999
- **LANDA, J.L.** *Reservoir parameter estimation constrained to pressure transients, performance history and distributed saturation data, Ph.D.,* 1997
- **KAMAL, M.M. ; PAN, Y. ; LANDA, J.L. ; THOMAS, O.O.** Numerical well testing - A method to use transient testing results in reservoir simulation. *SPE 95905,* 2005
- **VAN POOLEN H.K.** Radius of drainage and stabilization time equations. *Oil and Gas Journal,* 14 Septembre 1964, 138-146
- **THOMPSON, L.G. ; REYNOLDS, A.C.** Well testing for radially heterogeneous reservoirs under single and pultiphase flow conditions. *SPEFE,* Mars 1997, 57-64
- **GAUTIER, Y. ; BLUNT, M. ; CHRISTIE, M.** Nested gridding and streamline- based simulation for fast reservoir performance prediction. *Computational Geosciences,* 1999, 295-320
- **LIONS, J.-L.** Sur les sentinelles des systèmes distribués. Conditions frontières, termes sources, coefficients incomplètement connus. *C. R. Acad. Sci., Paris,* 1988, vol. 307, 865-870
- **HOFFMAN B. T. ; CAERS J.** Regional probability perturbations for history matching. *Journal of Petroleum Science and Engineering,* 1985, vol. 46, 53-71
- **HU, L.-Y.** Gradual deformation and iterative calibration of Gaussian-related stochastic models. *Math. Geol.,* 2000, vol. 32 (1), 87-108